# EUROPÄISCHE PATENTSCHRIFT

(11) **EP 1 780 039 B1**
(45) Veröffentlichungstag und Bekanntmachung des Hinweises auf die Patenterteilung: **24.09.2014**
(21) Anmeldenummer: 06021816.1
(22) Anmeldetag: 18.10.2006
(51) Int. Cl.: B42D 15/00

(54) **Sicherheitselement und Verfahren zu seiner Herstellung**
Security element and process for producing it
Élément de sécurité et procédé pour sa fabrication

(30) Priorität: 25.10.2005 DE 102005051395
(43) Veröffentlichungstag der Anmeldung: 02.05.2007
(73) Patentinhaber: Giesecke & Devrient GmbH, 81677 München (DE)
(72) Erfinder: Menz, Irina, Dr., 85630 Grasbrunn (DE)
(74) Vertreter: Zeuner Summerer Stütz

(56) Entgegenhaltungen:
- EP-A2- 1 564 605
- WO-A1-02/02351

## Beschreibung

Die Erfindung betrifft ein Sicherheitselement für Sicherheitspapiere, Wertdokumente und dergleichen mit ersten Bildelementen, die eine offene Bildinformation darstellen, und zweiten Bildelementen, die eine versteckte Bildinformation erzeugen. Die Erfindung betrifft auch ein Verfahren zum Herstellen eines derartigen Sicherheitselements.

Auf Produktkennzeichnungen, Wertdokumente oder Wertpapiere aufgebrachte Hologramme, holographische Gitterbilder und andere hologrammähnliche Beugungsstrukturen haben sich als nicht kopierbare Echtheitsmerkmale in den vergangenen Jahren weltweit durchgesetzt. Inzwischen werden jedoch auch Hologramme von Fälschern nachgeahmt und in Umlauf gebracht, die vom Bürger nicht ohne weiteres als Fälschungen erkannt werden können.

Um eine objektive Echtheitsprüfung der Hologramme oder hologrammähnlichen Strukturen zu ermöglichen, werden daher oft zusätzliche Informationen in das Design des Hologramms oder in die holographische Folie eingebracht, die mit entsprechenden Auslesegeräten schnell verifiziert werden können.

Ein Beispiel für das Einbringen versteckter Informationen in ein Hologramm offenbart die Druckschrift US 6,317,226. Dabei ist in einem Dot-Matrix-Hologramm eine versteckte Information untergebracht, die durch Auflegen eines gedruckten semitransparenten Linienrasters oder einer Lentikularlinse auf das Hologramm unter Ausnutzung des Moiré-Effekts ausgelesen werden kann.

Die Druckschrift WO 00/21033 A1 lehrt die Verwendung eines Sicherheitselements, das ein Hologramm und ein verstecktes Bild auf einem gemeinsamen Trägersubstrat implementiert. Bei dem Hologramm handelt es sich um ein im Tageslicht sichtbares Hologramm, das durch eine in einem Photopolymerfilm abgeformte beugungsoptische Struktur generiert wird und ohne Verwendung eines Lasers sichtbar ist. Das versteckte Bild ist auf dem Substrat vorzugsweise in der Nähe des Hologramms angeordnet und wird mittels einer Decodiervorrichtung, etwa eines digitalen Kopiergeräts, durch Erzeugung eines Aliasing- oder Moiré-Effekts sichtbar gemacht.

Es ist auch bekannt und beispielsweise in der Druckschrift US 6,392,768 B1 beschrieben, in ein Dot-Matrix-Hologramm eine versteckte optische Information einzubelichten, welche durch Bestrahlung des Hologramms mit konvergentem Laserlicht als reelles Bild auf einer Projektionsfläche ausgelesen werden kann. Zum Stand der Technik gehören auch die Druckschriften WO 02/02351 A1 (nächstliegender Stand der Technik, offenbart ein Sicherheitselement gemäß dem Oberbegriff von Anspruch 1) und EP 1564 605 A2.

All diesen Möglichkeiten zur Echtheitsabsicherung ist gemein, dass sie gewisse Auslesehilfsmittel, wie einen modifizierten Laserpointer, eine angepasste Decodierfolie oder ein angepasstes Linsenmuster, zur Decodierung oder Verifikation benötigen. Ist ein geübter Fälscher im Besitz derartiger Auslesehilfsmittel, kann er die versteckte Information oft nachstellen. Dies führt zu dem Zielkonflikt, dass eine erhöhte Sicherheit durch die versteckte Information nur dann gegeben ist, wenn nur wenige Prüfstellen die Auslesehilfsmittel besitzen. Auf der anderen Seite erfordert die Überprüfbarkeit des Sicherheitselements durch die breite Bevölkerung, dass die Auslesehilfsmittel jedem - und damit auch dem potentiellen Fälscher - zur Verfügung stehen.

Ausgehend davon liegt der Erfindung die Aufgabe zugrunde, ein Sicherheitselement der eingangs genannten Art anzugeben, das die Nachteile des Standes der Technik vermeidet. Insbesondere soll ein Sicherheitselement mit neuartigen versteckten Bildinformationen bereitgestellt werden, das einen hohen Fälschungsschutz bietet und dessen versteckte Information ohne besondere Hilfsmittel eindeutig erkannt werden kann.

Diese Aufgabe wird durch das Sicherheitselement mit den Merkmalen des Hauptanspruchs gelöst. Ein Verfahren zur Herstellung eines erfindungsgemäßen Sicherheitselements ist in einem nebengeordneten Anspruch angegeben. Weiterbildungen der Erfindung sind Gegenstand der Unteransprüche.

Gemäß der Erfindung umfassen die zweiten Bildelemente eines gattungsgemäßen Sicherheitselements feine, holographisch erzeugte Linienmuster, die in unterschiedlich tiefen Bildebenen eines Hologramms des Sicherheitselements einander zumindest teilweise überlappend angeordnet sind und die im Wesentlichen nur bei Betrachtung mit gerichtetem Licht erkennbare Moire-Effekte erzeugen. Insbesondere sind die Moire-Effekte bei Betrachtung mit diffusem Licht nicht erkennbar.

Der Begriff "gerichtetes Licht" bezeichnet dabei Licht mit einer klaren Vorzugsrichtung der Lichtstrahlen, also Licht, das in eine bestimmte Vorzugsrichtung strahlt. Die Lichtstrahlen von gerichtetem Licht sind daher weitgehend, wenn auch nicht unbedingt vollständig, parallel. Im gerichteten Licht werfen Gegenstände dunkle Schatten mit scharfen Rändern. Beispiele für gerichtetes Licht sind Sonnenstrahlung, Laserstrahlung oder auch die leicht divergente Strahlung einer Spotlampe. Im Gegensatz zu gerichtetem Licht steht diffuses Licht, das keine dominierende Vorzugsrichtung aufweist. Im diffusen Licht werfen Gegenstände helle Schatten mit verschwommenen Rändern. Beispiele für diffuses Licht sind Tageslicht bei bedecktem Himmel, das von mattweißen Oberflächen reflektierte Licht oder auch Kunstlicht aus einer Vielzahl verschiedener Beleuchtungsquellen, wie es oft in Banken, Kaufhäusern und dergleichen vorherrscht.

Um besonders feine Linienmuster zu erhalten, sind gemäß der Erfindung zumindest die tiefer liegend angeordneten Linienmuster holographisch erzeugt. Die höher liegend angeordneten Linienmuster können ebenfalls holographisch erzeugt sein. Vorzugsweise bestehen zumindest die tiefer liegend angeordneten Linienmuster aus Linien mit Liniendicken zwischen 0,01 mm und 0,1 mm, vorzugsweise von etwa 0,05 mm.

Die unterschiedlich tiefen Bildebenen weisen mit Vorteil einen virtuellen Abstand von etwa 1 mm oder mehr auf, um ausgeprägte Bewegungseffekte im gerichteten Licht zu ermöglichen. Dies bedeutet, dass die tiefer liegende Bildebene in einer virtuellen Tiefe vorliegt, deren Wirkung einer echten physikalischen Tiefe von etwa 1 mm oder mehr entspricht. In solchen Abständen angeordnete Linienmuster vermag das menschliche Auge nicht mehr aufzulösen.

In einer konkreten Ausgestaltung des erfindungsgemäßen Sicherheitselements sind die Linienmuster in zwei unterschiedlich tiefen Bildebenen eines Hologramms, insbesondere eines 2D-/3D-Hologramms angeordnet.

Bevorzugt stellen zumindest die tiefer liegend angeordneten Linienmuster eine Information, insbesondere Muster, Zeichen oder eine Codierung dar, die im Wesentlichen nur bei Betrachtung mit gerichtetem Licht durch die auftretenden Moiré-Effekte erkennbar ist. Die Linienmuster können dazu beispielsweise als Füllmuster innerhalb zumindest einer Objektkontur ausgebildet sein. Bei Betrachtung mit diffusem Licht treten keine Moiré-Effekte auf, so dass das versteckte Objekt unsichtbar bleibt. Erst wenn das Sicherheitselement unter gerichtetem Licht betrachtet wird, tritt das versteckte Objekt aufgrund der Moiré-Bewegungseffekte innerhalb der Objektkontur in Erscheinung.

In manchen Gestaltungen bietet es sich an, die von den Linienmustern dargestellte Information auf eine von den ersten Bildelementen dargestellte offene Information zu beziehen. Beispielsweise kann die versteckte Information eine offene Information vervollständigen oder ergänzen, und so eine besonders einfache Prüfung der Korrektheit der versteckten Information ermöglichen.

In bevorzugten Ausgestaltungen der Erfindung stellt die offene Bildinformation ein Hologramm, ein holographisches Gitterbild oder eine andere hologrammähnliche Beugungsstruktur dar. Auch ist die offene Bildinformation vorzugsweise bereits bei ambienter Beleuchtung des Sicherheitselements sichtbar. Darüber hinaus können die ersten Bildelemente weitere, unabhängig von den Beleuchtungsverhältnissen sichtbare holographische Bildelemente enthalten.

Vorzugsweise sind die ersten Bildelemente in der höchst liegenden der Bildebenen, in denen die zweiten Bildelemente angeordnet sind, vorgesehen. Enthält das Sicherheitselement beispielsweise eine Vordergrund- und eine beabstandete Hintergrundebene, so sind vorzugsweise die ersten Bildelemente in der Vordergrundebene angeordnet, und die Linienmuster der zweiten Bildelemente zum Teil in der Vordergrundebene und zum Teil in der Hintergrundebene.

Es versteht sich, dass das Sicherheitselement auch weitere Schichten, wie etwa eine Schutzschicht oder zusätzliche Effektschichten mit anderen Sicherheitsmerkmalen aufweisen kann.

Die zweiten Bildelemente sind zweckmäßig auf Betrachtung unter großflächiger Beleuchtung mit gerichtetem Licht ausgelegt. Sie heben sich damit von bekannten Hologrammen mit versteckter Information ab, bei denen die verborgende Information durch Bestrahlung mit einem fast punktförmigen Laserstrahl in Form eines Punktmusters auf einem Projektionsschirm rekonstruiert wird. Der von den feinen Linienmustern der zweiten Bildelemente erzeugte Moiré-Effekt ist dagegen bei punktueller Beleuchtung kaum wahrnehmbar und tritt erst bei einer großflächigen Beleuchtung des Sicherheitselements hervor, insbesondere bei der vollflächigen Beleuchtung des Sicherheitselements durch Sonnenlicht oder das Licht einer Halogenspotlampe.

Die Erfindung enthält ferner ein Verfahren zum Herstellen eines Sicherheitselements gemäß Anspruch 15.

Die Erfindung umfasst auch ein Sicherheitspapier für die Herstellung von Wertdokumenten oder dergleichen, das mit einem Sicherheitselement der beschriebenen Art ausgestattet ist, sowie einen Datenträger, insbesondere ein Wertdokument, wie eine Banknote, Ausweiskarte oder dergleichen, mit einem Sicherheitselement der beschriebenen Art.

Die beschriebenen Sicherheitselemente nutzen das begrenzte Auflösungsvermögen des menschlichen Auges, um die in einer tiefer liegenden Bildebene enthaltene Information bei gewöhnlichen Betrachtungsbedingungen (diffuse Beleuchtung) zu verbergen, da die feinen, nicht in der Bildebene liegenden Linienstrukturen in diesem Fall mit bloßem Auge nicht aufgelöst werden können. Durch geeignete Wahl des Abstands der verschiedenen Bildebenen können andererseits Moiré-Effekte angelegt werden, die bei Betrachtung des Sicherheitselements unter gerichtetem Licht deutlich sichtbar hervortreten. Die versteckte Information offenbart sich dann durch ausgeprägte Bewegungseffekte bei der Änderung des Betrachtungswinkels des Sicherheitselements.

Zur Herstellung solcher Sicherheitselemente sind hochauflösende Hologrammbelichtungstechniken erforderlich, so dass sie nur schwer nachzuarbeiten sind. Auf der anderen Seite benötigen die Sicherheitselemente keine besonderen Hilfsmittel zum Auslesen der versteckten Information, sondern können von jedermann unter gerichtetem Licht, wie beispielsweise Halogenspotlicht oder Sonnenlicht, auf Echtheit geprüft werden.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung einer Ausweiskarte mit einem erfindungsgemäßen Sicherheitselement,
- Fig. 2: eine schematische perspektivische Ansicht eines computergenerierten 2D/3D-Hologramms nach einem Ausführungsbeispiel der Erfindung, und
- Fig. 3: in (a) eine Aufsicht auf die tiefer liegende Hintergrundebene und in (b) eine Aufsicht auf die höher liegende Vordergrundebene des Hologramms der Fig. 2.

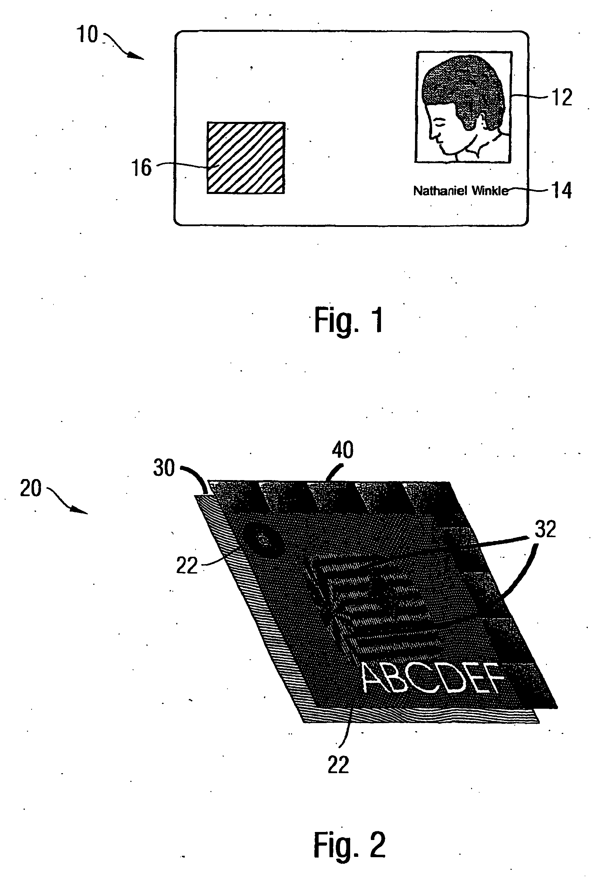

Die Erfindung wird nachfolgend am Beispiel einer Ausweiskarte erläutert. Fig. 1 zeigt dazu schematisch eine Ausweiskarte 10 mit einem Portrait 12 des Karteninhabers und weiteren personenbezogenen Daten 14. Darüber hinaus weist die Ausweiskarte ein erfindungsgemäßes Sicherheitselement 16 mit offenen und versteckten Bildinformationen auf.

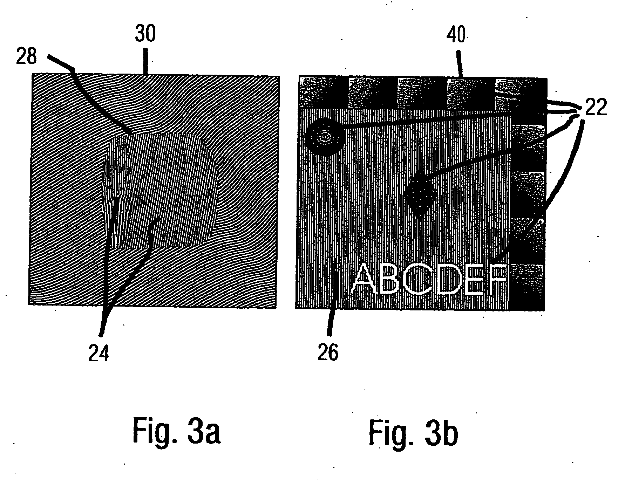

Zur genaueren Erläuterung des Aufbaus und der Funktionsweise der erfindungsgemäßen Sicherheitselemente zeigt Fig. 2 eine schematische perspektivische Ansicht eines computergenerierten 2D/3D-Hologramms 20 nach einem Ausführungsbeispiel der Erfindung, und Fig. 3 in (a) eine Aufsicht auf die tiefer liegende Hintergrundebene 30 und (b) eine Aufsicht auf die höher liegende Vordergrundebene 40 des Hologramms 20.

Mit Bezug auf die Figuren 2 und 3 enthält das 2D/3D-Hologramm 20 erste Bildelemente 22, die eine offene Bildinformation darstellten. Die ersten Bildelemente 22 stellen vorzugsweise zumindest zum Teil holographische Bildelemente dar und sind so gestaltet, dass sie bereits bei normalen ambienten Betrachtungsbedingungen (diffuses Kunst- oder Tageslicht) erkennbar sind.

Zusätzlich enthält das 2D/3D-Hologramm 20 versteckte Bildinformationen, die nur bei Betrachtung mit gerichtetem Licht, beispielsweise Halogenspotlicht oder Sonnenlicht, aufgrund der auftretenden Moire-Bewegungseffekte in Erscheinung treten, bei Betrachtung des Hologramms 20 mit diffusem Licht dagegen nicht erkennbar sind.

Dazu sind bei der Herstellung des 2D/3D-Hologramms 20 aufeinander abgestimmte feine Linienmuster 24 und 26 in zwei räumlich unterschiedlich tief liegenden Hologrammebenen 30 beziehungsweise 40 belichtet. Die tiefer liegende Hologrammebene 30 wird dabei als Hintergrundebene, die höher liegende Hologrammebene 40 als Vordergrundebene bezeichnet. Die bereits erwähnten ersten Bildelemente 22, die die offene Bildinformation erzeugen, sind in der Vordergrundebene 40 angeordnet.

Die feinen Linienmuster 24 der Hintergrundebene 30 sind holographisch erzeugt, und weisen sehr feine Linien mit einer Liniendicke zwischen 0,01 mm und 0,1 mm, im Ausführungsbeispiel von 0,05 mm auf. Darüber hinaus sind die Linienmuster 24 der Hintergrundebene 30 in verschiedenen Flächenbereichen so orientiert, dass sie insgesamt ein Füllmuster zumindest einer Objektkontur 28 bilden, wie etwa des in Fig. 2 und 3(a) beispielhaft gezeigten Zylinders 28.

Der virtuelle Abstand zwischen der Vordergrundebene 30 und der Hintergrundebene 40 des Hologramms 20 ist erfindungsgemäß größer als 1 mm, und beträgt im Ausführungsbeispiel beispielsweise 1,2 mm. Bei diesem Abstand zwischen den Hologrammebenen kann das bloße Auge das feine Linienmuster 24 der Hintergrundebene 30 unter normalen Betrachtungsbedingungen nicht auflösen, so dass der Umriss des Objekts 28 im holographischen Design versteckt ist.

Auf die Vordergrundebene 40 ist ein_zweites feines Linienmuster 26 belichtet, das holographisch oder nicht-holographisch erzeugt sein kann. Wesentlich ist lediglich, dass die Linienabstände und die Linienorientierungen in den beiden Linienmustern 24 und 26 erfindungsgemäß so aufeinander abgestimmt sind, dass ihre Überlagerung bei Betrachtung mit gerichtetem Licht optische Moiré-Bewegungseffekte erzeugt. Beispielsweise sind im Ausführungsbeispiel der Mantel und die Deckfläche des Zylinders 28 aufgrund des spitzen Winkels zwischen den beiden Linienmustern 24, 26 von Hell-Dunkel-Streifen 32 durchzogen, die sich beim Kippen des 2D/3D-Hologramms 20 zu bewegen bzw. zu drehen scheinen. Der Bewegungsablauf kann dabei an die Gestalt des Objekts 28 angepasst sein. Außerhalb des Objekts 28 treten wegen des dort großen Winkels zwischen den überlappenden Linienmustern 24 und 26 im Ausführungsbeispiel keine Moiré-Effekte auf. Durch den ausgeprägten Bewegungseffekt der Hell-Dunkel-Streifen 32 innerhalb des Umrisses des Objekts 28, tritt dieses bei Betrachtung des Hologramms 20 mit gerichtetem Licht deutlich hervor.

Da die beiden Linienmuster und insbesondere die Linienmuster 24 der Hintergrundebene 30 sehr fein ausgebildet sind, ist der Moiréeffekt nur unter gerichtetem Licht, wie etwa Halogenspotlicht oder Sonnenlicht, erkennbar. Bei virtuellen Abständen von Vordergrundebene 30 und Hintergrundebene 40 oberhalb von 1 mm, bei denen die Hintergrundebene 40 in einer virtuellen Tiefe von mehr als 1 mm liegt, werden die oben erläuterten starken Bewegungseffekte beobachtet, die das im Hologrammdesign versteckte Objekt 28 erst sichtbar machen.

Aufgrund des begrenzten Auflösungsvermögens des menschlichen Auges sind bei Betrachtung des 2D/3D-Hologramms 20 unter diffusem Licht dagegen nur die holographischen Elemente 22 und das Linienmuster 26 der Vordergrundebene 40 zu erkennen. Der Bereich des Linienmusters 26 erscheint dem bloßen Auge dabei als nahezu unstrukturierte homogene Fläche, von dem sich lediglich die offenen Hologrammelemente 22 abheben.

## Patentansprüche

1. Sicherheitselement für Sicherheitspapiere, Wertdokumente und dergleichen, mit ersten Bildelementen (22), die eine offene Bildinformation darstellen, und zweiten Bildelementen, die eine versteckte Bildinformation erzeugen, bei dem die zweiten Bildelemente feine, holographisch erzeugte Linienmuster (24, 26) umfassen, **dadurch gekennzeichnet, dass** die Linienmuster in unterschiedlich tiefen Bildebenen (30, 40) eines Hologramms (20) des Sicherheitselements einander zumindest teilweise überlappend angeordnet sind und dass die Linienmuster im Wesentlichen nur bei Betrachtung mit gerichtetem Licht erkennbare Moiré-Effekte erzeugen.

2. Sicherheitselement nach Anspruch 1, **dadurch gekennzeichnet, dass** die Moiré-Effekte bei Betrachtung mit diffusem Licht nicht erkennbar sind.

3. Sicherheitselement nach wenigstens einem der Ansprüche 1 bis 2, **dadurch gekennzeichnet, dass** die Linienmuster (24, 26) in zwei unterschiedlich tiefen Bildebenen (30, 40) eines 2D-/3D-Hologramms angeordnet sind.

4. Sicherheitselement nach wenigstens einem der Ansprüche 1 bis 3, **dadurch gekennzeichnet, dass** zumindest die tiefer angeordneten Linienmuster (24) aus Linien mit Liniendicken zwischen 0,01 mm und 0,1 mm, vorzugsweise von etwa 0,05 mm bestehen.

5. Sicherheitselement nach wenigstens einem der Ansprüche 1 bis 4, **dadurch gekennzeichnet, dass** die unterschiedlich tiefen Bildebenen (30, 40) einen virtuellen Abstand von etwa 1 mm oder mehr aufweisen.

6. Sicherheitselement nach wenigstens einem der Ansprüche 1 bis 5, **dadurch gekennzeichnet, dass** die zweiten Bildelemente auf Betrachtung unter großflächiger Beleuchtung mit gerichtetem Licht ausgelegt sind.

7. Sicherheitselement nach wenigstens einem der Ansprüche 1 bis 6, **dadurch gekennzeichnet, dass** zumindest die tiefer angeordneten Linienmuster (24) eine Information, insbesondere Muster, Zeichen oder eine Codierung darstellen, die im Wesentlichen nur bei Betrachtung mit gerichtetem Licht durch die auftretenden Moiré-Effekte erkennbar ist.

8. Sicherheitselement nach Anspruch 7, **dadurch gekennzeichnet, dass** die Linienmuster (24) als Füllmuster innerhalb zumindest einer Objektkontur (28) angeordnet sind.

9. Sicherheitselement nach wenigstens einem der Ansprüche 1 bis 8, **dadurch gekennzeichnet, dass** die von den Linienmustern (24, 26) dargestellte Information auf eine von den ersten Bildelementen (22) dargestellte Information bezogen ist.

10. Sicherheitselement nach wenigstens einem der Ansprüche 1 bis 9, **dadurch gekennzeichnet, dass** die offene Bildinformation ein Hologramm, ein holographisches Gitterbild oder eine andere hologrammähnliche Beugungsstruktur darstellt.

11. Sicherheitselement nach wenigstens einem der Ansprüche 1 bis 10, **dadurch gekennzeichnet, dass** die offene Bildinformation bei ambienter Beleuchtung des Wiedergabebereichs sichtbar ist.

12. Sicherheitselement nach wenigstens einem der Ansprüche 1 bis 11, **dadurch gekennzeichnet, dass** die ersten Bildelemente (22) weitere, unabhängig von den Beleuchtungsverhältnissen sichtbare holographische Bildelemente enthalten.

13. Sicherheitselement nach wenigstens einem der Ansprüche 1 bis 12, **dadurch gekennzeichnet, dass** die ersten Bildelemente (22) in der höchst liegenden (40) der Bildebenen (30,40), in denen die zweiten Bildelemente angeordnet sind, vorgesehen sind.

14. Sicherheitselement nach wenigstens einem der Ansprüche 1 bis 13, **dadurch gekennzeichnet, dass** das Sicherheitselement eine Schutzschicht aufweist.

15. Verfahren zum Herstellen eines Sicherheitselements, das eine offene und eine versteckte Bildinformation enthält, bei dem
- Bildelemente (22), die die offene Bildinformation darstellen, in einer höher liegenden Bildebene (40) des Sicherheitselements erzeugt werden, und
- feine Linienmuster (24, 26), die bei Betrachtung mit gerichtetem Licht die versteckte Bildinformation im Form von Moiré-Bewegungseffekten erzeugen, in unterschiedlich tiefen Bildebenen eines Hologramms (20) des Sicherheitselements einander zumindest teilweise überlappend holographisch erzeugt werden.

16. Verfahren nach Anspruch 15, **dadurch gekennzeichnet, dass** zumindest die in einer tieferen Bildebene (30) angeordneten Linienmuster (24) mit Linien mit Liniendicken zwischen 0,01 mm und 0,1 mm, vorzugsweise von etwa 0,05 mm erzeugt werden.

17. Verfahren nach wenigstens einem der Ansprüche 15 bis 16, **dadurch gekennzeichnet, dass** die unterschiedlich tiefen Bildebenen (30, 40) mit einem virtuellen Abstand von etwa 1 mm oder mehr erzeugt werden.

18. Verfahren nach wenigstens einem der Ansprüche 15 bis 17, **dadurch gekennzeichnet, dass** die Bildelemente (22), die die offene Bildinformation darstellen, in Form eines Hologramms, eines holographischen Gitterbilds oder einer anderen hologrammähnlichen Beugungsstruktur erzeugt werden.

19. Sicherheitspapier für die Herstellung von Wertdokumenten oder dergleichen, das mit einem Sicherheitselement nach wenigstens einem der Ansprüche 1 bis 14 ausgestattet ist.

20. Datenträger, insbesondere Wertdokument wie Banknote, Ausweiskarte oder dergleichen, mit einem Sicherheitselement nach einem der Ansprüche 1 bis 14.

21. Verwendung eines Sicherheitselements nach wenigstens einem der Ansprüche 1 bis 14, eines Sicherheitspapiers nach Anspruch 19 oder eines Datenträgers nach Anspruch 20 zur Fälschungssicherung von Waren beliebiger Art.

## Claims

1. A security element for security papers, value documents and the like, having first image elements (22) that constitute an overt piece of image information, and second image elements that produce a hidden piece of image information, in which the second image elements comprise fine, holographically produced line patterns (24, 26), **characterized in that** the line patterns are arranged at least partially overlapping each other in image planes (30, 40) of differing depths in a hologram (20) of the security element, and **in that** the line patterns produce moiré effects that are perceptible substantially only when viewed with directed light.

2. The security element according to claim 1, **characterized in that** the moiré effects are not perceptible when viewed with diffuse light.

3. The security element according to at least one of claims 1 to 2, **characterized in that** the line patterns (24, 26) are arranged in two image planes (30, 40) of differing depths in a 2-D/3-D hologram.

4. The security element according to at least one of claims 1 to 3, **characterized in that** at least the line patterns (24) arranged at lower depths consist of lines having line thicknesses between 0.01 mm and 0.1 mm, preferably of about 0.05 mm.

5. The security element according to at least one of claims 1 to 4, **characterized in that** the image planes (30, 40) of differing depths have a virtual spacing of about 1 mm or more.

6. The security element according to at least one of claims 1 to 5, **characterized in that** the second image elements are configured for viewing under large-area lighting with directed light.

7. The security element according to at least one of claims 1 to 6, **characterized in that** at least the line patterns (24) arranged at lower depths constitute a piece of information, especially patterns, characters or a code, that is perceptible through the occurring moiré effects substantially only when viewed with directed light.

8. The security element according to claim 7, **characterized in that** the line patterns (24) are arranged as a filler pattern within at least one object contour (28).

9. The security element according to at least one of claims 1 to 8, **characterized in that** the piece of information constituted by the line patterns (24, 26) is related to a piece of information constituted by the first image elements (22).

10. The security element according to at least one of claims 1 to 9, **characterized in that** the overt piece of image information constitutes a hologram, a holographic grating image or another hologram-like diffraction pattern.

11. The security element according to at least one of claims 1 to 10, **characterized in that** the overt piece of image information is visible under ambient lighting of the depiction region.

12. The security element according to at least one of claims 1 to 11, **characterized in that** the first image elements (22) include further holographic image elements that are visible independently of the lighting conditions.

13. The security element according to at least one of claims 1 to 12, **characterized in that** the first image elements (22) are provided in the highestlying (40) of the image planes (30, 40), in which the second image elements are arranged.

14. The security element according to at least one of claims 1 to 13, **characterized in that** the security element comprises a protective layer.

15. A method for manufacturing a security element that includes an overt and a hidden piece of image information, in which
- image elements (22) that constitute the overt piece of image information are produced in a higher-lying image plane (40) of the security element, and
- fine line patterns (24, 26) that, when viewed with directed light, produce the hidden piece of image information in the form of moiré motion effects, are produced holographically at least partially overlapping each other in image planes of differing depths in a hologram (20) of the security element.

16. The method according to claim 15, **characterized in that** at least the line patterns (24) arranged in a lower image plane (30) are produced having lines having line thicknesses between 0.01 mm and 0.1 mm, preferably of about 0.05 mm.

17. The method according to at least one of claims 15 to 16, **characterized in that** the image planes (30, 40) of differing depths are produced having a virtual spacing of about 1 mm or more.

18. The method according to at least one of claims 15 to 17, **characterized in that** the image elements (22) that constitute the overt piece of image information are produced in the form of a hologram, a holographic grating image or another hologram-like diffraction pattern.

19. A security paper for manufacturing value documents or the like that is furnished with a security element according to at least one of claims 1 to 14.

20. A data carrier, especially a value document, such as a banknote, identification card or the like, having a security element according to one of claims 1 to 14.

21. A use of a security element according to at least one of claims 1 to 14, of a security paper according to claim 19, or of a data carrier according to claim 20 for securing goods of any kind against counterfeiting.

## Revendications

1. Élément de sécurité pour des papiers de sécurité, documents de valeur et similaires, comprenant des premiers éléments d'image (22) qui représentent une information d'image ouverte, et des seconds éléments d'image qui produisent une information d'image cachée, sachant que les seconds éléments d'image comprennent des motifs de lignes (24, 26) fins produits par holographie, **caractérisé en ce que** les motifs de lignes sont disposés en se chevauchant partiellement dans des niveaux d'image (30, 40) de différentes profondeurs d'un hologramme (20) de l'élément de sécurité et que les motifs de lignes produisent essentiellement des effets de moiré perceptibles uniquement lorsqu'ils sont observés avec une lumière dirigée.

2. Élément de sécurité selon la revendication 1, **caractérisé en ce que** les effets de moiré ne sont pas perceptibles lorsqu'ils sont observés avec une lumière diffuse.

3. Élément de sécurité selon au moins l'une des revendications 1 et 2, **caractérisé en ce que** les motifs de lignes (24, 26) sont disposés dans deux niveaux d'image (30, 40) de différentes profondeurs d'un hologramme 2D/3D.

4. Élément de sécurité selon au moins l'une des revendications 1 à 3, **caractérisé en ce qu'**au moins les motifs de lignes (24) placés plus profonds sont composés de lignes ayant des épaisseurs de ligne entre 0,01 mm et 0,1 mm, de préférence d'environ 0,05 mm.

5. Élément de sécurité selon au moins l'une des revendications 1 à 4, **caractérisé en ce que** les niveaux d'image (30, 40) de différentes profondeurs présentent un écart virtuel d'environ 1 mm ou plus.

6. Élément de sécurité selon au moins l'une des revendications 1 à 5, **caractérisé en ce que** les seconds éléments d'image sont soumis à l'observation avec un éclairage à grande surface à lumière dirigée.

7. Élément de sécurité selon au moins l'une des revendications 1 à 6, **caractérisé en ce qu'**au moins les motifs de lignes (24) placés plus profonds représentent une information, en particulier un motif, un dessin ou un codage qui est essentiellement perceptible par les effets de moiré se produisant lorsqu'il est observé avec une lumière dirigée.

8. Élément de sécurité selon la revendication 7, **caractérisé en ce que** les motifs de lignes (24) sont disposés en tant que motif de remplissage à l'intérieur d'au moins un contour d'objet (28).

9. Élément de sécurité selon au moins l'une des revendications 1 à 8, **caractérisé en ce que** l'information représentée par les motifs de lignes (24, 26) se rapporte à une information représentée par les premiers éléments d'image (22).

10. Élément de sécurité selon au moins l'une des revendications 1 à 9, **caractérisé en ce que** l'information d'image ouverte représente un hologramme, une image tramée holographique ou une autre structure à diffraction semblable à un hologramme.

11. Élément de sécurité selon au moins l'une des revendications 1 à 10, **caractérisé en ce que** l'information d'image ouverte est visible avec un éclairage ambiant de la zone de réflexion.

12. Élément de sécurité selon au moins l'une des revendications 1 à 11, **caractérisé en ce que** les premiers éléments d'image (22) comportent d'autres éléments d'image holographiques visibles indépendamment des rapports d'éclairage.

13. Élément de sécurité selon au moins l'une des revendications 1 à 12, **caractérisé en ce que** les premiers éléments d'image (22) sont prévus dans le niveau le plus élevé (40) des niveaux d'image (30, 40) dans lesquels sont placés les seconds éléments d'image.

14. Élément de sécurité selon au moins l'une des revendications 1 à 13, **caractérisé en ce que** l'élément de sécurité présente une couche protectrice.

15. Procédé de fabrication d'un élément de sécurité qui contient une information d'image ouverte et cachée, dans lequel
- des éléments d'image (22) qui représentent l'information d'image ouverte sont produits dans un niveau d'image (40) plus élevé de l'élément de sécurité, et
- des motifs de lignes fins (24, 26) qui produisent l'information d'image cachée sous forme d'effets de mouvements de moiré lorsqu'ils sont observés avec une lumière dirigée, sont produits de façon holographique en se chevauchant au moins partiellement dans des niveaux d'image de différentes profondeurs d'un hologramme (20) de l'élément de sécurité.

16. Procédé selon la revendication 15, **caractérisé en ce qu'**au moins les motifs de lignes (24) disposés dans un niveau d'image (30) plus profond sont produits avec des lignes ayant des épaisseurs de ligne entre 0,01 mm et 0,1 mm, de préférence d'environ 0,05 mm.

17. Procédé selon au moins l'une des revendications 15 et 16, **caractérisé en ce que** les niveaux d'image (30, 40) de différentes profondeurs présentent un écart virtuel d'environ 1 mm ou plus.

18. Procédé selon au moins l'une des revendications 15 à 17, **caractérisé en ce que** les éléments d'image (22) qui représentent l'information d'image ouverte sont produits sous la forme d'un hologramme, d'une image tramée holographique ou d'une autre structure à diffraction semblable à un hologramme.

19. Papier de sécurité pour la fabrication de documents de valeur ou similaires, qui est doté d'un élément de sécurité selon au moins l'une des revendications 1 à 14.

20. Support de données, en particulier document de valeur comme un billet de banque, une carte d'identité ou similaires, comprenant un élément de sécurité selon l'une des revendications 1 à 14.

21. Emploi d'un élément de sécurité selon au moins l'une des revendications 1 à 14, d'un papier de sécurité selon la revendication 19 ou d'un support de données selon la revendication 20 pour rendre des marchandises de toute sorte infalsifiables.
